Europäisches Patentamt

European Patent Office

Office européen des brevets

(19)

(11) **EP 1 400 217 B1**

(12) **FASCICULE DE BREVET EUROPEEN**

(45) Date de publication et mention
de la délivrance du brevet:
**14.12.2005 Bulletin 2005/50**

(51) Int Cl.⁷: **A61C 5/02**, G07C 3/00

(21) Numéro de dépôt: **02020787.4**

(22) Date de dépôt: **17.09.2002**

(54) **Procédé et dispositif pour la mesure de la fatigue des instruments dentaires**

Verfahren und Vorrichtung zur Messung der Ermüdung von zahnärztlichen Instrumenten

Method and device for measuring fatigue of dental instruments

(84) Etats contractants désignés:
**AT BE BG CH CY CZ DE DK EE ES FI FR GB GR
IE IT LI LU MC NL PT SE SK TR**

(43) Date de publication de la demande:
**24.03.2004 Bulletin 2004/13**

(73) Titulaire: **Maillefer Instruments Holding S.A.R.L.
1338 Ballaigues (CH)**

(72) Inventeur: **Aeby, Francois
1442 Montagny-Pres-Yverdon (CH)**

(74) Mandataire: **Micheli & Cie
122, rue de Genève,
CP 61
1226 Thonex-Genève (CH)**

(56) Documents cités:
**DE-A- 10 007 308          FR-A- 2 797 324
US-A- 3 744 300          US-A- 4 733 361**

## Description

La présente invention a pour objet un procédé ainsi qu'un dispositif de mesure de la fatigue d'un instrument dentaire **permettant de mesurer la fatigue d'un instrument dentaire utilisé pour le traitement endodontique.**

En particulier, l'invention concerne les instruments dentaires utilisés dans les traitements de racines dentaires. Ces traitements de racines dentaires, appelés traitements endodontiques, sont de plus en plus réalisés par une instrumentation mécanisée et automatisée. Il y a quelques années, le praticien faisait appel à une série de limes manuelles qu'il utilisait par des mouvements rotatifs alternés et de va-et-vient dans le canal dentaire, méthode des forces balancées ou dites de "Roanne". Aujourd'hui, le dentiste utilise de plus en plus des limes rotatives qui sont disponibles dans une série de différentes tailles et qui sont utilisées en rotation continue. Cette succession de limes utilisées dans une séquence définie permet de nettoyer le canal dentaire en respectant le trajet canalaire originel, dans un minimum de temps et en respectant les principes de base de l'endodontie. Afin d'achever ces buts, les limes sont réalisées en faisant appel à un alliage en nickel titane extrêmement élastique ce qui permet une courbure de ces instruments pendant l'utilisation, la courbure pouvant s'adapter au canal dentaire à traiter. Cette exigence de flexibilité de l'instrument dentaire entraîne pourtant des difficultés au niveau du matériel utilisé et donc pour la durée de vie des instruments dentaires.

La sécurité d'utilisation de ces instruments est toute relative et dépend d'un certain nombre de paramètres, notamment de la formation du dentiste, de la qualité de la dentine, de la difficulté du traitement et bien sûr des conditions d'utilisation des instruments. Ce dernier point est important pour la fabrication des limes. Les conditions d'utilisation sont liées à la vitesse de rotation, à la pression exercée dans le canal, à la taille de l'instrument et très certainement au temps d'utilisation de la lime. Un instrument soumis trop longtemps en tension tant en torsion qu'en flexion risque de subir une fracture. Les traitements endodontiques ne se font pas toujours dans des canaux droits. La plupart des cas présente des courbures souvent sévères et provoque des stress importants pour les instruments. Les tensions ainsi créées fatiguent l'instrument et, après un certain temps d'utilisation, la lime peut céder et se briser. Le bout cassé reste dans le canal et le praticien doit user de son art pour le ressortir, ce qui présente un inconvénient majeur pour le patient ainsi que pour le dentiste. Tous les moyens mis en oeuvre pour aider le dentiste dans le but d'éviter une fracture de l'instrument sont importants.

Aujourd'hui, certains fabricants d'instruments proposent des moteurs avec limitation de couple. Ces moteurs permettent de limiter le couple délivré, ils contrôlent en permanence le courant consommé et dès que la valeur de réglage est atteinte, ils déclenchent et inversent le sens de rotation. La lime part ainsi en sens inverse et se libère.

Ce type de dispositifs permet d'éviter le premier type de fracture, soit celle causée par des couples trop importants de coupe ou des pressions trop importantes exercées par le praticien. Par contre, ces dispositifs ne permettent pas d'éviter le deuxième type de fractures souvent rencontrées par les dentistes, soit celles issues de la fatigue du matériau de l'instrument dentaire.

**La demande de brevet française FR 2 797 324 expose l'idée générale de contrôler la fatigue d'un instrument endodontique et d'indiquer une valeur correspondante. Afin de faire ceci, il est prévu d'attribuer manuellement ou de manière sémi-automatique une valeur correspondant à la fatigue de l'instrument. Par contre, la détermination de la valeur de fatigue selon cette divulgation nécessite l'intervention du dentiste.**

Le but de la présente invention est de remédier à ces inconvénients et l'invention est caractérisée à cet effet par le fait qu'un procédé et un dispositif selon la présente invention déterminent le nombre de cycles de rotation de l'instrument endodontique.

**Il est notamment possible de déterminer le nombre de cycles de rotation individuellement pour chaque instrument endodontique, le nombre de cycles de rotation de l'instrument endodontique pouvant être mesuré dès que l'instrument est utilisé et stocké pendant sa durée de vie afin de disposer d'une mesure de son utilisation intégrée.**

De plus, le procédé et le dispositif disposent d'au moins une valeur cible pour le nombre de cycles de rotation de l'instrument endodontique. De manière avantageuse, ces valeurs cibles sont classées et utilisées en fonction d'au moins un paramètre correspondant à la dépendance de la fatigue de l'instrument de plusieurs facteurs environnementaux.

Par ces mesures, on obtient, par comparaison entre le nombre déterminé de cycles de rotation de l'instrument endodontique et la valeur cible correspondante, une valeur pour le risque de fracture de l'instrument endodontique dû à la fatigue dudit instrument, qui ensuite peut être affichée, indiquant au praticien la probabilité de fracture de son instrument dentaire.

D'autres avantages ressortent des caractéristiques exprimées dans les revendications dépendantes et de la description exposant ci-après l'invention plus en détail.

L'invention sert à mettre à disposition un procédé et un dispositif de mesure de la fatigue d'un instrument endodontique en indiquant le risque de fracture que le praticien peut avoir en utilisant sa lime.

Le principe de base du procédé selon la présente invention ainsi que d'un dispositif correspondant est de mesurer le nombre de cycles de rotation de l'instrument endodontique dès qu'il travaille, de comparer ce nombre de cycles de rotation à une valeur prédéterminée en fonction de chaque instrument et éventuellement encore d'autres paramètres importants, et par une approche probabilistique d'en déterminer le risque de fracture de l'instrument.

On détermine tout d'abord le degré de courbure du canal dentaire à traiter avec l'instrument endodontique en question. En effet, les canaux droits ne présentent que peu de risque de fracture dû à la fatigue cyclique et, inversement, un canal très courbe fatigue beaucoup l'instrument. Il est entre autre, selon l'exactitude du classement désiré, possible de classer les degrés de courbure en quatre catégories, soit:

| négligeable | rayon de courbure > 10 mm |
|---|---|
| faible | rayon de courbure entre 5 et 10 mm |
| moyen | rayon de courbure entre 3 et 5 mm |
| fort | rayon de courbure < 3 mm. |

On saisit alors, par exemple par un clavier du dispositif de mesure de la fatigue, ce degré, puis sélectionne l'instrument dentaire à utiliser dans la séquence selon le protocole opératoire.

Les cycles de rotation de l'instrument dentaire sont comptés dès qu'il commence à travailler, ce qu'on peut par exemple vérifier en mesurant le courant appliqué au moteur de l'instrument, un courant non zéro indiquant le début du travail de l'instrument.

Dès l'arrêt du travail de l'instrument dentaire, le nombre de cycles de rotation n est comptabilisé en additionnant le nombre de cycles de rotation $n_1$ pendant sa dernière utilisation lors du traitement 1 et le nombre de cycles de rotation

$$n_{l-1} = \sum_{i=0}^{l-1}$$

$n_i$ déjà comptabilisé pour cet instrument, à un instrument neuf sera attribué un nombre $n_0 = 0$ de cycles de rotation. Le nouveau nombre de cycles de rotation à additionner peut être, avant l'addition, multiplié avec un coefficient de pondération $p_{klm}$ choisi selon le type k d'instrument dentaire, la courbure l du canal dentaire ou encore en fonction d'autres paramètres m comme la dureté du matériel dentaire à traiter qu'on pourrait inclure dans le procédé afin d'affiner l'estimation du risque de fracture, le nombre de cycles de rotation n pouvant être déterminé dans ce cas par une formule du type

$$n = \sum_{i=0}^{l}$$

$p_{klm} \cdot n_i$, avec le nombre total 1 des traitements.

Cette procédure est appliquée individuellement à chaque instrument dentaire de la série des instruments dont dispose le praticien, car les instruments se distinguent par exemple par leur longueur, par leur diamètre, par leur profil, etc., ce qui peut influencer l'effet de la fatigue du matériel. Le nombre de cycles de rotation, éventuellement après avoir attribué un coefficient de pondération pour tenir compte de plusieurs facteurs pouvant influencer l'effet de la fatigue, est alors disponible individuellement pour chaque instrument dentaire et représente une approche pour donner une valeur quantitative à son utilisation intégrée, qui est stockée pendant la durée de vie de l'instrument dentaire.

Il est donc possible de déterminer le nombre de cycles de rotation de l'instrument endodontique, ceci individuellement pour chaque instrument endodontique, le nombre de cycles de rotation de l'instrument endodontique étant mesuré dès que l'instrument est utilisé et stocké pendant sa durée de vie afin de disposer d'une mesure de son utilisation intégrée.

De plus, le procédé et le dispositif disposent d'au moins une valeur cible pour le nombre de cycles de rotation de l'instrument endodontique. De manière avantageuse, ces valeurs cibles sont classées et utilisées en fonction d'au moins un paramètre correspondant à la dépendance de la fatigue de l'instrument de plusieurs facteurs environnementaux. En particulier, les valeurs cibles sont déterminées en laboratoire en fonction de chaque instrument dentaire et également pour chaque rayon de courbure du canal dentaire. Ils peuvent également inclure la dépendance de la fatigue de l'instrument dentaire d'autres paramètres, comme la dureté du matériel dentaire à traiter, qui pourrait être classé de manière analogue au rayon de courbure. Ainsi, on peut affiner l'estimation du risque de fracture de l'instrument dentaire. Les valeurs cibles représentent des limites du nombres de cycles de rotation au-delà desquelles le risque de fracture de l'instrument dentaire devient trop important.

Dans le cas mentionné ci-dessus, l'ensemble de ces valeurs cibles constituent une base de données à deux paramètres, soit le type d'instrument dentaire et le rayon de courbure du canal dentaire à traiter. Cette base de données des valeurs cibles permet la détermination des coefficients de pondération mentionnés ci-dessus qui sont utilisés pour déterminer le nombre de cycles de rotation d'un instrument dentaire. Par exemple, dans le cas de considération du type k de l'instrument dentaire et de la courbure l du canal dentaire, le coefficient de pondération $p_{kl}$ peut être calculé selon la formule

$$p_{kl} = \left(\frac{N_{kl}}{N}\right)^{-1},$$

$N_{kl}$ étant la valeur cible pour un instrument dentaire k donné et un rayon de courbure l du canal dentaire spécifique et N étant par exemple la moyenne de toutes ces valeurs cibles.

Le nombre de cycles de rotation est ensuite comparé à une valeur cible qui est normalement une valeur cible normalisée à l'aide de la base de données.

En particulier, le risque de fracture de l'instrument dentaire dû à la fatigue du matériau dudit instrument est évalué en effectuant un calcul de probabilité. Ce calcul de probabilité pour le risque de fracture R peut être fait selon une formule décrivant une fonction qui correspond au mieux à la dépendance du risque de fracture R des facteurs pris en considération. On peut, de préférence, calculer ce risque de fracture R selon la formule

$$R = 1 - e^{-\left(\frac{n}{N}\right)^b} \qquad (I),$$

n signifiant le nombre de cycles de rotation déterminé comme décrit plus haut, en intégrant, à l'aide des coefficients de pondération, sur tous les traitements effectués, N étant la valeur cible, de préférence normalisée, et b signifiant un coefficient de raideur de la fonction choisie afin de décrire au mieux mathématiquement le risque de fracture R en fonction du développement de la fatigue de l'instrument dentaire. En utilisant les valeurs cibles de façon directe, au lieu des coefficients de pondération susmentionnés, le risque de fracture R peut également être évaluée en utilisant la formule

$$R = 1 - e^{-\left(\sum_{i=0}^{I} \frac{n_i}{N_i}\right)^b}$$

en additionnant les quotients du nombre de cycles de rotation $n_i$ lors d'un traitement i et de la valeur cible $N_i$ correspondante pour le nombre total I des traitements.

On peut également envisager une autre formule statistique pour indiquer le risque de fracture, du type

$$R = 1 - \sqrt{1 - \left(\frac{n}{N}\right)^b} \qquad (II),$$

ceci pouvant être de même formulé sans ou avec utilisation des coefficients de pondération. La racine carré pourrait être remplacé, selon la fonction à modeler, par un autre exposant autre que 0.5 et b est de préférence b=1. Encore d'autres fonctions mathématiques pourraient être utilisées à cet effet, le fait d'intégrer sur tous les traitements effectués étant toujours important afin de saisir la fatigue intégrée de l'instrument dentaire lors de sa durée de vie. Indépendamment de la fonction spécifique choisie pour décrire le risque de fracture, la valeur R indique donc clairement au dentiste le risque de fracture de son instrument dentaire dû à la fatigue de ce dernier lors des traitements effectués à l'aide de cet instrument.

Le risque de fracture de l'instrument endodontique dû à la fatigue dudit instrument est ensuite affiché afin d'en informer le praticien pendant son travail.

Par ces mesures, on obtient, lors du procédé selon la présente invention, par comparaison entre le nombre déterminé de cycles de rotation de l'instrument endodontique et une valeur cible correspondante, une valeur pour le risque de fracture de l'instrument endodontique dû à la fatigue dudit instrument, qui ensuite peut être affichée, indiquant au praticien la probabilité de fracture de son instrument dentaire.

Un dispositif de mesure de la fatigue d'un instrument dentaire correspondant au procédé décrit ci-dessus permet de mesurer la fatigue d'un instrument dentaire utilisé pour le traitement endodontique et, en particulier, il permet de déterminer le nombre de cycles de rotation de l'instrument endodontique.

Il comprend des moyens afin de commencer à déterminer le nombre de cycles de rotation de l'instrument endodontique dès que l'instrument est utilisé. Un moteur entraînant l'instrument dentaire en rotation peut à cet effet par exemple être connecté à un appareil pour mesurer le courant ou la puissance fourni au moteur et pour déclencher la détermination du nombre de cycles de rotation dès que le courant ou la puissance fourni au moteur est différent de zéro.

Il comprend également des moyens de calcul, par exemple un microprocesseur, afin de coopérer avec ledit moteur pour déterminer le nombre de cycles de rotation de l'instrument dentaire et d'effectuer une comparaison entre le nombre déterminé de cycles de rotation et une valeur cible. De plus, un tel dispositif comprend des moyens de stockage afin de stocker au moins une valeur cible pour le nombre de cycles de rotation de l'instrument endodontique.

Un dispositif selon la présente invention permet, à l'aide des moyens de calcul et des moyens de stockage susmentionnés, de déterminer le nombre de cycles de rotation de l'instrument endodontique à l'aide de coefficients de pondération ainsi que de classer, dans une base de données, et d'utiliser la ou les valeurs cibles en fonction d'au moins un paramètre correspondant à la dépendance de la fatigue de l'instrument.

De même, les moyens de calcul peuvent effectuer un calcul de probabilité afin d'évaluer le risque de fracture de l'instrument endodontique dû à la fatigue dudit instrument, ledit calcul de probabilité pour le risque de fracture R pouvant être fait par exemple selon l'une des formules (I) ou (II) décrites ci-dessus.

Les données sur la courbure du canal dentaire, le type d'instrument dentaire utilisé et d'autres informations nécessaires peuvent être saisies par des moyens de saisie, normalement un clavier connecté au dispositif.

Finalement, le risque de fracture de l'instrument endodontique dû à la fatigue dudit instrument peut être affiché sur le dispositif, par exemple à l'aide d'un écran ou une série de lumières, ou peut être signalé acoustiquement au dentiste lorsque le risque dépasse une valeur limite.

## Revendications

1. Procédé de mesure de la fatigue d'un instrument dentaire permettant de mesurer la fatigue d'un instrument dentaire utilisé pour le traitement endodontique, **caractérisé par le fait qu'**il détermine le nombre de cycles de rotation de l'instrument endodontique.

2. Procédé selon la revendication précédente, **caractérisé par le fait qu'**il commence à déterminer le nombre de cycles de rotation de l'instrument endodontique dès que l'instrument est utilisé.

3. Procédé selon l'une des revendications 1 à 2, **caractérisé par le fait que** le nombre de cycles de rotation de l'instrument endodontique est déterminé à l'aide de coefficients de pondération.

4. Procédé selon l'une des revendications 1 à 3, **caractérisé par le fait qu'**il dispose d'au moins une valeur cible pour le nombre de cycles de rotation de l'instrument endodontique.

5. Procédé selon la revendication précédente, **caractérisé par le fait que** la ou les valeurs cibles sont classées et utilisées en fonction d'au moins un paramètre correspondant à la dépendance de la fatigue de l'instrument.

6. Procédé selon la revendication précédente, **caractérisé par le fait que** le paramètre comprend le type de l'instrument endodontique et/ou la courbure du canal dentaire.

7. Procédé selon l'une des revendications 4 à 6, **caractérisé par le fait qu'**une comparaison entre le nombre déterminé de cycles de rotation de l'instrument endodontique et une valeur cible est effectuée.

8. Procédé selon la revendication précédente, **caractérisé par le fait qu'**il effectue un calcul de probabilité afin d'évaluer le risque de fracture de l'instrument endodontique dû à la fatigue dudit instrument.

9. Procédé selon la revendication précédente, **caractérisé par le fait qu'**il effectue ledit calcul de probabilité pour le risque de fracture R selon la formule

$$R = 1 - e^{-\left(\Sigma_{i=0}^{I} \frac{n_i}{N_i}\right)^{b}},$$

$n_i$ signifiant le nombre de cycles de rotation déterminé lors du traitement i, $N_i$ étant la valeur cible correspondante, I étant le nombre total des traitements et b signifiant un coefficient de raideur.

10. Procédé selon la revendication 8, **caractérisé par le fait qu'**il effectue ledit calcul de probabilité pour le risque de fracture R selon la formule

$$R = 1 - \sqrt{1 - \left(\sum_{i=0}^{I} \frac{n_i}{N_i}\right)^{b}},$$

$n_i$ signifiant le nombre de cycles de rotation déterminé lors du traitement i, $N_i$ étant la valeur cible correspondante, I étant le nombre total des traitements et b signifiant un coefficient de raideur.

11. Procédé selon l'une des revendications 8 à 10, **caractérisé par le fait que** le risque de fracture de l'instrument endodontique dû à la fatigue dudit instrument est affiché.

12. Dispositif de mesure de la fatigue d'un instrument dentaire permettant de mesurer la fatigue d'un instrument dentaire utilisé pour le traitement endodontique, **caractérisé par le fait qu'**il permet de déterminer le nombre de cycles de rotation de l'instrument endodontique.

13. Dispositif selon la revendication précédente, **caractérisé par le fait qu'**il comprend des moyens afin de commencer à déterminer le nombre de cycles de rotation de l'instrument endodontique dès que l'instrument est utilisé.

14. Dispositif selon l'une des revendications 12 à 13, **caractérisé par le fait qu'**il permet de déterminer le nombre de cycles de rotation de l'instrument endodontique à l'aide de coefficients de pondération.

15. Dispositif selon l'une des revendications 12 à 14, **caractérisé par le fait qu'**il comprend des moyens de stockage afin de stocker au moins une valeur cible pour le nombre de cycles de rotation de l'instrument endodontique.

16. Dispositif selon la revendication précédente, **caractérisé par le fait que** la ou les valeurs cibles sont classées et utilisées en fonction d'au moins un paramètre correspondant à la dépendance de la fatigue de l'instrument.

17. Dispositif selon la revendication précédente, **caractérisé par le fait que** le paramètre comprend le type de l'instrument endodontique et/ou la courbure du canal dentaire.

18. Dispositif selon l'une des revendications 15 à 17, **caractérisé par le fait qu'**il comprend des moyens de calcul afin d'effectuer une comparaison entre le nombre déterminé de cycles de rotation de l'instrument endodontique et une valeur cible.

19. Dispositif selon la revendication précédente, **caractérisé par le fait que** les moyens de calcul effectuent un calcul de probabilité afin d'évaluer le risque de fracture de l'instrument endodontique dû à la fatigue dudit instrument.

20. Dispositif selon la revendication précédente, **caractérisé par le fait que** les moyens de calcul effectuent ledit calcul de probabilité pour le risque de fracture R selon la formule

$$R = 1 - e^{-\left(\Sigma_{i=0}^{I} \frac{n_i}{N_i}\right)^b},$$

$n_i$ signifiant le nombre de cycles de rotation déterminé lors du traitement i, $N_i$ étant la valeur cible correspondante, I étant le nombre total des traitements et b signifiant un coefficient de raideur.

21. Dispositif selon la revendication 19, **caractérisé par le fait que** les moyens de calcul effectuent ledit calcul de probabilité pour le risque de fracture R selon la formule

$$R = 1 - \sqrt{1 - \left(\sum_{i=0}^{I} \frac{n_i}{N_i}\right)^b},$$

$n_i$ signifiant le nombre de cycles de rotation déterminé lors du traitement i, $N_i$ étant la valeur cible correspondante, I étant le nombre total des traitements et b signifiant un coefficient de raideur.

22. Dispositif selon l'une des revendications 19 à 21, **caractérisé par le fait que** le risque de fracture de l'instrument endodontique dû à la fatigue dudit instrument est affiché.

**Patentansprüche**

1. Verfahren zur Messung der Ermüdung eines zahnärztlichen Instruments, das es gestattet, die Ermüdung eines zahnärztlichen Instruments zu messen, das für die endodontische Behandlung eingesetzt wird, **dadurch gekennzeichnet, dass** damit die Anzahl von Zyklen der Drehung des endodontischen Instruments gemessen wird.

2. Verfahren nach dem vorangehenden Anspruch, **dadurch gekennzeichnet, dass** es von dem Moment an, da das endodontische Instrument eingesetzt wird, mit der Bestimmung der Anzahl von Zyklen der Drehung des Instruments beginnt.

3. Verfahren nach einem der Ansprüche 1 bis 2, **dadurch gekennzeichnet, dass** die Anzahl von Zyklen der Drehung des endodontischen Instruments mit Hilfe von Wichtungsfaktoren bestimmt wird.

4. Verfahren nach einem der Ansprüche 1 bis 3, **dadurch gekennzeichnet, dass** es über mindestens einen Zielwert für die Anzahl von Zyklen der Drehung des endodontischen Instruments verfügt.

5. Verfahren nach dem vorangehenden Anspruch, **dadurch gekennzeichnet, dass** der oder die Zielwerte in Abhängigkeit von mindestens einem Parameter, der der Abhängigkeit der Ermüdung des Instruments entspricht, klassifiziert und eingesetzt werden.

6. Verfahren nach dem vorangehenden Anspruch, **dadurch gekennzeichnet, dass** der Parameter den Typ des endodontischen Instruments und/oder die Krümmung des Wurzelkanals umfasst.

7. Verfahren nach einem der Ansprüche 4 bis 6, **dadurch gekennzeichnet, dass** ein Vergleich zwischen der bestimmten Anzahl von Zyklen der Drehung des endodontischen Instruments und einem Zielwert angestellt wird.

8. Verfahren nach dem vorangehenden Anspruch, **dadurch gekennzeichnet, dass** es eine Berechnung der Wahrscheinlichkeit durchführt, um die Bruchgefahr des endodontischen Instruments auszuwerten, die auf die Ermüdung des Instruments zurückzuführen ist.

9. Verfahren nach dem vorangehenden Anspruch, **dadurch gekennzeichnet, dass** es die Berechnung der Wahrscheinlichkeit für die Bruchgefahr, $R$, nach der Formel

$$R = 1 - e^{-\left(\sum_{i=0}^{I} \frac{n_i}{N_i}\right)^b}$$

ausführt, wo $n_i$ die Anzahl von Zyklen der Drehung bedeutet, die während der Behandlung $i$ bestimmt wurde, $N_i$ der entsprechende Zielwert ist, $I$ die Gesamtzahl der Behandlungen ist und $b$ einen Steilheitskoeffizienten bedeutet.

**10.** Verfahren nach Anspruch 8, **dadurch gekennzeichnet, dass** es die Berechnung der Wahrscheinlichkeit für die Bruchgefahr, *R*, nach der Formel

$$R = 1 - \sqrt{1 - \left(\sum_{i=0}^{I} \frac{n_i}{N_i}\right)^b}$$

ausführt, wo $n_i$ die Anzahl von Zyklen der Drehung bedeutet, die während der Behandlung *i* bestimmt wurde, $N_i$ der entsprechende Zielwert ist, *I* die Gesamtzahl der Behandlungen ist und *b* einen Steilheitskoeffizienten bedeutet.

**11.** Verfahren nach einem der Ansprüche 8 bis 10, **dadurch gekennzeichnet, dass** die Bruchgefahr des endodontischen Instruments, die auf die Ermüdung des Instruments zurückzuführen ist, angezeigt wird.

**12.** Vorrichtung zur Messung der Ermüdung eines zahnärztlichen Instruments, die es gestattet, die Ermüdung eines zahnärztlichen Instruments zu messen, das für die endodontische Behandlung eingesetzt wird, **dadurch gekennzeichnet, dass** sie es gestattet, die Anzahl von Zyklen der Drehung des endodontischen Instruments zu bestimmen.

**13.** Vorrichtung nach dem vorangehenden Anspruch, **dadurch gekennzeichnet, dass** sie Mittel umfasst, um von dem Moment an, da das endodontische Instrument eingesetzt wird, mit der Bestimmung der Anzahl von Zyklen der Drehung des Instruments zu beginnen.

**14.** Vorrichtung nach einem der Ansprüche 12 bis 13, **dadurch gekennzeichnet, dass** es erlaubt, die Anzahl von Zyklen der Drehung des endodontischen Instruments mit Hilfe von Wichtungsfaktoren zu bestimmen.

**15.** Vorrichtung nach einem der Ansprüche 12 bis 14, **dadurch gekennzeichnet, dass** es Speichermittel umfasst, um mindestens einen Zielwert für die Anzahl von Zyklen der Drehung des endodontischen Instruments zu speichern.

**16.** Vorrichtung nach dem vorangehenden Anspruch, **dadurch gekennzeichnet, dass** der oder die Zielwerte in Abhängigkeit von mindestens einem Parameter, der der Abhängigkeit der Ermüdung des Instruments entspricht, klassifiziert und eingesetzt werden.

**17.** Vorrichtung nach dem vorangehenden Anspruch, **dadurch gekennzeichnet, dass** der Parameter den Typ des endodontischen Instruments und/oder die Krümmung des Wurzelkanals umfasst.

**18.** Vorrichtung nach einem der Ansprüche 15 bis 17, **dadurch gekennzeichnet, dass** sie Mittel für Berechnungen umfasst, um einen Vergleich zwischen der bestimmten Anzahl von Zyklen der Drehung des endodontischen Instruments und einem Zielwert anzustellen.

**19.** Vorrichtung nach dem vorangehenden Anspruch, **dadurch gekennzeichnet, dass** die Mittel für Berechnungen eine Berechnung der Wahrscheinlichkeit durchführen, um die Bruchgefahr des endodontischen Instruments auszuwerten, die auf die Ermüdung des Instruments zurückzuführen ist.

**20.** Vorrichtung nach dem vorangehenden Anspruch, **dadurch gekennzeichnet, dass** die Mittel für Berechnungen die Berechnung der Wahrscheinlichkeit für die Bruchgefahr, R, nach der Formel

$$R = 1 - e^{-\left(\sum_{i=0}^{I} \frac{n_i}{N_i}\right)^b}$$

ausführen, wo $n_i$ die Anzahl von Zyklen der Drehung bedeutet, die während der Behandlung *i* bestimmt wurde, $N_i$ der entsprechende Zielwert ist, *I* die Gesamtzahl der Behandlungen ist und *b* einen Steilheitskoeffizienten bedeutet.

**21.** Vorrichtung nach Anspruch 19, **dadurch gekennzeichnet, dass** die Mittel für Berechnungen die Berechnung der Wahrscheinlichkeit für die Bruchgefahr, *R*, nach der Formel

$$R = 1 - \sqrt{1 - \left(\sum_{i=0}^{I} \frac{n_i}{N_i}\right)^b}$$

ausführen, wo $n_i$ die Anzahl von Zyklen der Drehung bedeutet, die während der Behandlung *i* bestimmt wurde, $N_i$ der entsprechende Zielwert ist, *I* die Gesamtzahl der Behandlungen ist und *b* einen Steilheitskoeffizienten bedeutet.

**22.** Vorrichtung nach einem der Ansprüche 19 bis 21, **dadurch gekennzeichnet, dass** die Bruchgefahr des endodontischen Instruments, die auf die Ermüdung des Instruments zurückzuführen ist, angezeigt wird.

## Claims

1.  Method for measuring the fatigue of a dental instrument, allowing the fatigue of a dental instrument that is used for endodontic treatment to be measured, **characterised in that** it determines the number of cycles of rotation of the endodontic instrument.

2.  Method according to the preceding claim, **characterised in that** it starts determining the number of cycles of rotation of the endodontic instrument as soon as the instrument is used.

3.  Method according to one of claims 1 to 2, **characterised in that** the number of cycles of rotation of the endodontic instrument is determined with the help of weighting factors.

4.  Method according to one of claims 1 to 3, **characterised in that** it disposes of at least one target value for the number of cycles of rotation of the endodontic instrument.

5.  Method according to the preceding claim, **characterised in that** the target value or values are classified and used as functions of at least one parameter that corresponds to the dependence of fatigue of the instrument.

6.  Method according to the preceding claim, **characterised in that** the parameter comprises the type of endodontic instrument and/or the curvature of the root canal.

7.  Method according to one of claims 4 to 6, **characterized in that** comparison is made between the number of cycles of rotation of the endodontic instrument that was determined, and a target value.

8.  Method according to the preceding claim, **characterised in that** it carries out a probability calculation in order to evaluate the risk of breaking of the endodontic instrument due to the fatigue of said instrument.

9.  Method according to the preceding claim, **characterised in that** it carries out this probability calculation for the risk, $R$, of breaking according to the formula

$$R = 1 - e^{-\left(\sum_{i=0}^{I} \frac{n_i}{N_i}\right)^b}$$

where $n_i$ is the number of cycles of rotation determined during treatment $i$, $N_i$ is the corresponding target value, $I$ is the total number of treatments, and $b$ is a steepness factor.

10. Method according to claim 8, **characterised in that** it carries out the probability calculation for the risk, R, of breaking according to the formula

$$R = 1 - \sqrt{1 - \left(\sum_{i=0}^{I} \frac{n_i}{N_i}\right)^b}$$

where $n_i$ is the number of cycles of rotation determined during treatment $i$, $N_i$ is the corresponding target value, $I$ is the total number of treatments, and $b$ is a steepness factor.

11. Method according to one of claims 8 to 10, **characterised in that** the risk of breaking of the endodontic instrument that is due to the fatigue of said instrument is displayed.

12. Device for measuring the fatigue of a dental instrument, allowing the fatigue of a dental instrument that is used for endodontic treatment to be measured, **characterised in that** it allows one to determine the number of cycles of rotation of the endodontic instrument.

13. Device according to the preceding claim, **characterised in that** it comprises means to start determining the number of cycles of rotation of the endodontic instrument as soon as the instrument is used.

14. Device according to one of claims 12 to 13, **characterised in that** it allows the number of cycles of rotation of the endodontic instrument to be determined with the help of weighting factors.

15. Device according to one of claims 12 to 14, **characterised in that** it comprises memory means in order to store at least one target value for the number of cycles of rotation of the endodontic instrument.

16. Device according to the preceding claim, **characterised in that** the target value or values are classified and used as functions of at least one parameter that corresponds to the dependence of fatigue of the instrument.

17. Device according to the preceding claim, **characterised in that** the parameter comprises the type of endodontic instrument and/or the curvature of the root canal.

18. Device according to one of claims 15 to 17, **char-**

**acterized in that** it comprises means of calculation in order to make comparison between the number of cycles of rotation of the endodontic instrument that was determined, and a target value.

19. Device according to the preceding claim, **characterised in that** the means of calculation perform a probability calculation in order to evaluate the risk of breaking of the endodontic instrument due to the fatigue of this instrument.

20. Device according to the preceding claim, **characterised in that** the means of calculation carry out this probability calculation for the risk, R, of breaking according to the formula

$$R = 1 - e^{-\left(\sum_{i=0}^{I} \frac{n_i}{N_i}\right)^b}$$

where $n_i$ is the number of cycles of rotation determined during treatment $i$, $N_i$ is the corresponding target value, $I$ is the total number of treatments, and $b$ is a steepness factor.

21. Device according to claim 19, **characterised in that** the means of calculation carry out the probability calculation for the risk, $R$, of breaking according to the formula

$$R = 1 - \sqrt{1 - \left(\sum_{i=0}^{I} \frac{n_i}{N_i}\right)^b}$$

where $n_i$ is the number of cycles of rotation determined during treatment $i$, $N_i$ is the corresponding target value, $I$ is the total number of treatments, and $b$ is a steepness factor.

22. Device according to one of claims 19 to 21, **characterised in that** the risk of breaking of the endodontic instrument that is due to the fatigue of said instrument is displayed.